# FASCICULE DE BREVET EUROPEEN

(11) **EP 3 562 972 B1**
(45) Date de publication et mention de la délivrance du brevet: **14.04.2021**
(21) Numéro de dépôt: 17832303.6
(22) Date de dépôt: 27.12.2017
(51) Int. Cl.: C25B 1/10, C25B 9/20, C25B 15/08, H01M 8/2432, H01M 8/2483, H01M 8/04007

(54) **SYSTÈME DE COUPLAGE ÉTANCHE À HAUTE TEMPÉRATURE D'UN EMPILEMENT À OXYDES SOLIDES DE TYPE SOEC/SOFC**
SYSTEM ZUR DICHTEN KOPPLUNG BEI HOHEN TEMPERATUREN EINES FESTOXID-STAPELS VOM SOEC/SOFC-TYP
SYSTEM FOR HIGH-TEMPERATURE TIGHT COUPLING OF A STACK HAVING SOEC/SOFC-TYPE SOLID OXIDES

(30) Priorité: 02.01.2017 FR 1750009
(43) Date de publication de la demande: 06.11.2019
(73) Titulaire: Commissariat à l'énergie atomique et aux énergies alternatives, 75015 Paris (FR)
(72) Inventeur: PLANQUE, Michel, 38180 Seyssins (FR); ORESIC, Bruno, 38210 Tullins (FR); ROUX, Guilhem, 38120 Saint-Egrève (FR); SZYNAL, Philippe, 73800 Chignin (FR); BERNARD, Charlotte, 38500 La Buisse (FR)
(74) Mandataire: Brevalex
(86) Numéro de dépôt international: PCT/FR2017/053849
(87) Numéro de publication internationale: WO 2018/122531

(56) Documents cités:
- CN-U- 203 653 708
- CN-U- 203 836 426
- US-A1- 2008 233 457
- US-A1- 2010 055 525

## Description

### DOMAINE TECHNIQUE

La présente invention se rapporte au domaine général de l'électrolyse de l'eau à haute température (EHT), en particulier l'électrolyse de la vapeur d'eau à haute température (EVHT), respectivement désignées par les appellations anglaises « High Temperature Electrolysis » (HTE) et « High Temperature Steam Electrolysis » (HTSE), de l'électrolyse du dioxyde de carbone (CO₂), voire encore de la co-électrolyse de l'eau à haute température (EHT) avec le dioxyde de carbone (CO₂).

Plus précisément, l'invention se rapporte au domaine des électrolyseurs à oxydes solides à haute température, désignés habituellement par l'acronyme SOEC (pour « Solide Oxide Electrolyzer Cell » en anglais).

Elle concerne également le domaine des piles à combustible à oxydes solides à haute température, désignées habituellement par l'acronyme SOFC (pour « Solid Oxide Fuel Cells » en anglais).

Ainsi, de façon plus générale, l'invention se réfère au domaine des empilements à oxydes solides de type SOEC/SOFC fonctionnant à haute température.

Plus précisément, l'invention concerne un ensemble comportant un empilement à oxydes solides de type SOEC/SOFC et un four couplé audit empilement par le biais d'un système de couplage étanche à haute température dudit empilement.

### ÉTAT DE LA TECHNIQUE ANTÉRIEURE

Dans le cadre d'un électrolyseur à oxydes solides à haute température de type SOEC, il s'agit de transformer par le biais d'un courant électrique, au sein d'un même dispositif électrochimique, la vapeur d'eau (H₂O) en dihydrogène (H₂) et en dioxygène (O₂), et/ou encore de transformer le dioxyde de carbone (CO₂) en monoxyde de carbone (CO) et en dioxygène (O₂). Dans le cadre d'une pile à combustible à oxydes solides à haute température de type SOFC, le fonctionnement est inverse pour produire un courant électrique et de la chaleur en étant alimentée en dihydrogène (H₂) et en dioxygène (O₂), typiquement en air et en gaz naturel, à savoir par du méthane (CH₄). Par souci de simplicité, la description suivante privilégie le fonctionnement d'un électrolyseur à oxydes solides à haute température de type SOEC réalisant l'électrolyse de l'eau. Toutefois, ce fonctionnement est applicable à l'électrolyse du dioxyde de carbone (CO₂), voire encore de la co-électrolyse de l'eau à haute température (EHT) avec le dioxyde de carbone (CO₂). De plus, ce fonctionnement est transposable au cas d'une pile à combustible à oxydes solides à haute température de type SOFC.

Pour réaliser l'électrolyse de l'eau, il est avantageux de la réaliser à haute température, typiquement entre 600 et 1000°C, parce qu'il est plus avantageux d'électrolyser de la vapeur d'eau que de l'eau liquide et parce qu'une partie de l'énergie nécessaire à la réaction peut être apportée par de la chaleur, moins chère que l'électricité.

Pour mettre en œuvre l'électrolyse de l'eau à haute température (EHT), un électrolyseur à oxydes solides à haute température de type SOEC est constitué d'un empilement de motifs élémentaires comportant chacun une cellule d'électrolyse à oxyde solide, ou encore cellule électrochimique, constituée de trois couches anode/électrolyte/cathode superposées l'une sur l'autre, et de plaques d'interconnexion en alliages métalliques, aussi appelées plaques bipolaires ou interconnecteurs. Chaque cellule électrochimique est enserrée entre deux plaques d'interconnexion. Un électrolyseur à oxydes solides à haute température de type SOEC est alors un empilement alterné de cellules électrochimiques et d'interconnecteurs. Une pile à combustible à oxydes solides à haute température de type SOFC est constituée du même type d'empilement de motifs élémentaires. Cette technologie à haute température étant réversible, le même empilement peut fonctionner en mode électrolyse et produire de l'hydrogène et de l'oxygène à partir d'eau et d'électricité, ou en mode pile à combustible et produire de l'électricité à partir d'hydrogène et d'oxygène.

Chaque cellule électrochimique correspond à un assemblage électrolyte/électrodes, qui est typiquement un assemblage multicouche en céramique dont l'électrolyte est formé par une couche centrale conductrice d'ions, cette couche étant solide, dense et étanche, et enserrée entre les deux couches poreuses formant les électrodes. Il est à noter que des couches supplémentaires peuvent exister, mais qui ne servent qu'à améliorer l'une ou plusieurs des couches déjà décrites.

Les dispositifs d'interconnexion, électrique et fluidique, sont des conducteurs électroniques qui assurent, d'un point de vue électrique, la connexion de chaque cellule électrochimique de motif élémentaire dans l'empilement de motifs élémentaires, garantissant le contact électrique entre une face et la cathode d'une cellule et entre l'autre face et l'anode de la cellule suivante, et d'un point de vue fluidique, combinant ainsi la production de chacune des cellules. Les interconnecteurs assurent ainsi les fonctions d'amenée et de collecte de courant électrique et délimitent des compartiments de circulation des gaz, pour la distribution et/ou la collecte.

Plus précisément, les interconnecteurs ont pour fonction principale d'assurer le passage du courant électrique mais aussi la circulation des gaz au voisinage de chaque cellule (à savoir : vapeur d'eau injectée, hydrogène et oxygène extraits pour l'électrolyse EHT ; air et combustible dont l'hydrogène injecté et eau extraite pour une pile SOFC), et de séparer les compartiments anodiques et cathodiques de deux cellules adjacentes, qui sont les compartiments de circulation des gaz du côté respectivement des anodes et des cathodes des cellules.

En particulier, pour un électrolyseur à oxydes solides à haute température de type SOEC, le compartiment cathodique comporte la vapeur d'eau et l'hydrogène, produit de la réaction électrochimique, tandis que le compartiment anodique comporte un gaz drainant, si présent, et de l'oxygène, autre produit de la réaction électrochimique. Pour une pile à combustible à oxydes solides à haute température de type SOFC, le compartiment anodique comporte le carburant, tandis que le compartiment cathodique comporte le comburant.

Pour réaliser l'électrolyse de la vapeur d'eau à haute température (EHT), on injecte de la vapeur d'eau (H₂O) dans le compartiment cathodique. Sous l'effet du courant électrique appliqué à la cellule, la dissociation des molécules d'eau sous forme de vapeur est réalisée à l'interface entre l'électrode à hydrogène (cathode) et l'électrolyte : cette dissociation produit du gaz dihydrogène (H₂) et des ions oxygène (O²⁻). Le dihydrogène (H₂) est collecté et évacué en sortie de compartiment à hydrogène. Les ions oxygène (O²⁻ ) migrent à travers l'électrolyte et se recombinent en dioxygène (O₂) à l'interface entre l'électrolyte et l'électrode à oxygène (anode). Un gaz drainant, tel que de l'air, peut circuler au niveau de l'anode et ainsi collecter l'oxygène généré sous forme gazeuse à l'anode.

Pour assurer le fonctionnement d'une pile à combustible à oxydes solides (SOFC), on injecte de l'air (oxygène) dans le compartiment cathodique de la pile et de l'hydrogène dans le compartiment anodique. L'oxygène de l'air va se dissocier en ions O²⁻. Ces ions vont migrer dans l'électrolyte de la cathode vers l'anode pour oxyder l'hydrogène et former de l'eau avec une production simultanée d'électricité. En pile SOFC, tout comme en électrolyse SOEC, la vapeur d'eau se trouve dans le compartiment de dihydrogène (H₂). Seule la polarité est inversée.

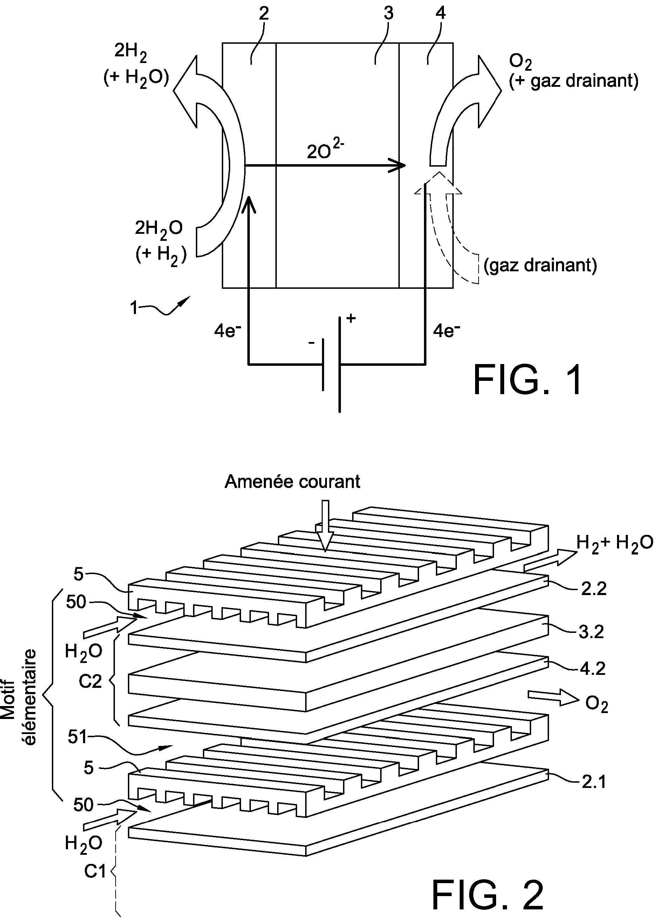

A titre d'illustration, la figure 1 représente une vue schématique montrant le principe de fonctionnement d'un électrolyseur à oxydes solides à haute température de type SOEC. La fonction d'un tel électrolyseur est de transformer la vapeur d'eau en hydrogène et en oxygène selon la réaction électrochimique suivante :

2 H₂O → 2 H₂ + O₂.

Cette réaction est réalisée par voie électrochimique dans les cellules de l'électrolyseur. Comme schématisée sur la figure 1, chaque cellule d'électrolyse élémentaire 1 est formée d'une cathode 2 et d'une anode 4, placées de part et d'autre d'un électrolyte solide 3. Les deux électrodes (cathode et anode) 2 et 4 sont des conducteurs électroniques et/ou ioniques, en matériau poreux, et l'électrolyte 3 est étanche au gaz, isolant électronique et conducteur ionique. L'électrolyte 3 peut être en particulier un conducteur anionique, plus précisément un conducteur anionique des ions O²⁻ et l'électrolyseur est alors dénommé électrolyseur anionique, par opposition aux électrolytes protoniques (H⁺).

Les réactions électrochimiques se font à l'interface entre chacun des conducteurs électroniques et le conducteur ionique.

A la cathode 2, la demi-réaction est la suivante :

2 H₂O + 4e⁻ → 2H₂+ 2 O²⁻.

A l'anode 4, la demi-réaction est la suivante:

2 O²⁻ → O₂ + 4e⁻.

L'électrolyte 3, intercalé entre les deux électrodes 2 et 4, est le lieu de migration des ions O²⁻ sous l'effet du champ électrique créé par la différence de potentiel imposée entre l'anode 4 et la cathode 2.

Comme illustré entre parenthèses sur la figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air, peut en outre être injecté en entrée pour évacuer l'oxygène produit. L'injection d'un gaz drainant a pour fonction supplémentaire de jouer le rôle de régulateur thermique.

Un électrolyseur, ou réacteur d'électrolyse, élémentaire est constitué d'une cellule élémentaire telle que décrite ci-dessus, avec une cathode 2, un électrolyte 3, et une anode 4, et de deux interconnecteurs qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des interconnecteurs. L'ensemble est positionné entre deux plaques d'interconnexion d'extrémité qui supportent les alimentations électriques et des alimentations en gaz de l'électrolyseur (réacteur d'électrolyse).

Un électrolyseur à oxydes solides à haute température de type SOEC comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Comme indiqué précédemment, les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, le compartiment dit cathodique a pour fonction la distribution du courant électrique et de la vapeur d'eau ainsi que la récupération de l'hydrogène à la cathode en contact.

Le compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur à oxydes solides à haute température de type SOEC selon l'art antérieur. Cet électrolyseur comporte une pluralité de cellules d'électrolyse élémentaires C1, C2, de type à oxydes solides (SOEC), empilées alternativement avec des interconnecteurs 5. Chaque cellule C1, C2 est constituée d'une cathode 2.1, 2.2 et d'une anode (seule l'anode 4.2 de la cellule C2 est représentée), entre lesquelles est disposé un électrolyte (seul l'électrolyte 3.2 de la cellule C2 est représenté).

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. La collecte de l'hydrogène produit et de la vapeur d'eau résiduelle à la cathode 2.1, 2.2 est effectuée dans le compartiment cathodique 50 en aval de la cellule C1, C2 après dissociation de la vapeur d'eau par celle-ci. La collecte de l'oxygène produit à l'anode 4.2 est effectuée dans le compartiment anodique 51 en aval de la cellule C1, C2 après dissociation de la vapeur d'eau par celle-ci. L'interconnecteur 5 assure le passage du courant entre les cellules C1 et C2 par contact direct avec les électrodes adjacentes, c'est-à-dire entre l'anode 4.2 et la cathode 2.1.

Les conditions de fonctionnement d'un électrolyseur à oxydes solides à haute température (SOEC) étant très proches de celles d'une pile à combustible à oxydes solides (SOFC), les mêmes contraintes technologiques se retrouvent.

Ainsi, le bon fonctionnement de tels empilements à oxydes solides de type SOEC/SOFC fonctionnant à haute température requiert principalement de satisfaire aux points énoncés ci-après.

Tout d'abord, il est nécessaire d'avoir une isolation électrique entre deux interconnecteurs successifs sous peine de court-circuiter la cellule électrochimique, mais aussi un bon contact électrique et une surface de contact suffisante entre une cellule et un interconnecteur. La plus faible résistance ohmique possible est recherchée entre cellules et interconnecteurs.

Par ailleurs, il faut disposer d'une étanchéité entre les compartiments anodiques et cathodiques sous peine d'avoir une recombinaison des gaz produits entraînant une baisse de rendement et surtout l'apparition de points chauds endommageant l'empilement.

Enfin, il est indispensable d'avoir une bonne distribution des gaz à la fois en entrée et en récupération des produits sous peine de perte de rendement, d'inhomogénéité de pression et de température au sein des différents motifs élémentaires, voire de dégradations rédhibitoires des cellules électrochimiques.

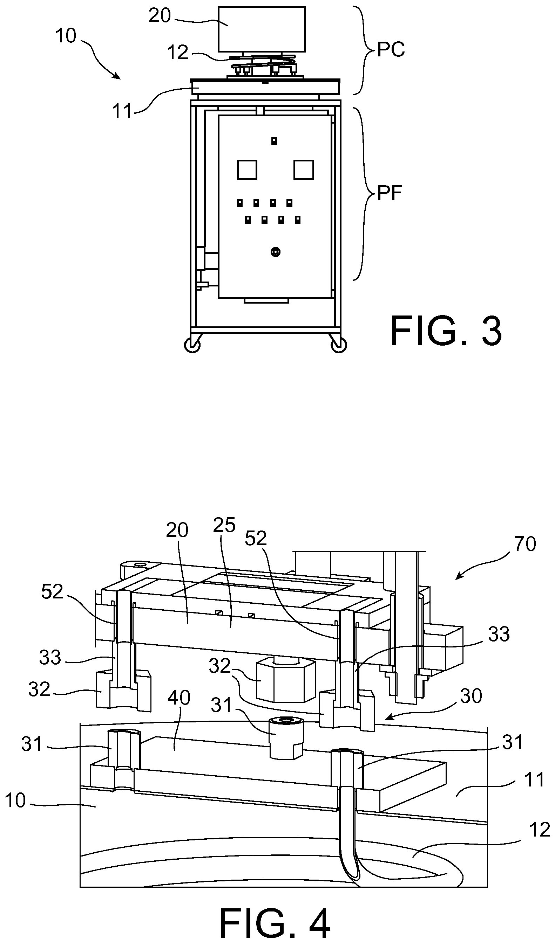

Les gaz entrants et sortants dans un empilement d'électrolyse à haute température (SOEC) ou de pile à combustible (SOFC) fonctionnant à haute température peuvent être gérés par le biais de dispositifs appropriés d'un four tel que celui illustré en référence à la figure 3.

Le four 10 comporte ainsi des parties froides PF et des parties chaudes PC, ces dernières comprenant la sole de four 11, un tube en boucle 12 pour gérer les entrées et sorties de gaz et l'empilement 20, encore appelé « stack », d'électrolyse à haute température (SOEC) ou de pile à combustible (SOFC).

Les couplages des dispositifs d'amenée et de sortie des gaz se font le plus souvent au niveau des parties froides PF, en particulier par des raccords de serrage mécanique double bague, des raccords à étanchéité de surface par joint métallique VCR®, des liaisons soudées ou encore des traversées étanches de cloisons.

Dans le cas des raccords de serrage mécanique double bague, les deux bagues séparent les fonctions d'étanchéité et de serrage de tube. La bague avant crée une étanchéité tandis que la bague arrière permet de faire avancer la bague avant axialement et applique un serrage effectif de tube radialement. Ce principe permet d'obtenir un très bon serrage de tube et une très bonne étanchéité aux fuites de gaz. De plus, son installation est facile et il présente une très bonne résistance à la fatigue causée par les vibrations. Le démontage est aisé en cas d'absence de soudage. Toutefois, ses inconvénients majeurs sont justement son absence de résistance aux hautes températures de sorte que la bague arrière, la bague avant et le tube peuvent se souder ensemble par soudage diffusion rendant la jonction indémontable.

Dans le cas des raccords à étanchéité de surface par joint métallique VCR®, l'étanchéité est obtenue lorsque le joint est compressé par deux bourrelets lors du serrage d'un écrou mâle ou d'un corps six pans avec un écrou femelle. Ce principe permet une très bonne étanchéité, la possibilité d'utiliser des joints différents (nickel, cuivre, inox, ...) selon la configuration la plus appropriée, et un montage/démontage facile avec changement du joint lors de ces opérations. Toutefois, cette solution ne convient pas à haute température, son fonctionnement ne permettant une température maximale que d'environ 537°C.

Dans le cas des liaisons soudées, une étanchéité totale est obtenue par le fait de souder les tubes entre eux par un procédé de type TIG (pour « Tungsten Inert Gas » en anglais) ou par soudeuse orbitale, c'est-à-dire un procédé TIG couplé à une buse rotative. Cependant, les opérations de soudure sur un empilement 20 monté dans un four 10 sont très compliquées du fait de l'accessibilité réduite pour pouvoir souder les tubes sur le pourtour.

Enfin, il existe un système de couplage résistant à une température d'environ 870°C, utilisant des traversées étanches de cloisons pour les passages de capteurs, sondes, signaux électriques et tubes. Ces traversées étanches de cloisons se présentent sous la forme d'un raccord fileté en inox 316L qui est à visser sur la paroi d'une tuyauterie, d'une cuve ou d'un couvercle. Selon leur version, ces traversées accueillent un ou plusieurs éléments traversants, de différents types, tailles et diamètres. Ces traversées permettent donc le passage d'éléments sans discontinuité et ne permettent pas la jonction étanche de deux éléments.

Les couplages des dispositifs d'amenée et de sortie des gaz au niveau des parties froides PF du four 10 constituent un inconvénient majeur car ces parties froides PF sont éloignées des résistances du four 10 et encombrées par les périphériques tels que les échangeurs, les isolants, les condenseurs, entre autres. Ceci implique de privilégier la réalisation des liaisons dans les parties chaudes PC en souhaitant pouvoir les rendre démontables et réutilisables facilement.

De plus, l'utilisation de l'enceinte du four 10 pour préchauffer les gaz d'entrée amène également à réaliser le tube en boucle 12, d'une longueur d'environ 2,5 à 3 m, pour utiliser le rayonnement des résistances chauffantes du four 10, ce qui ajoute de la complexité dans les cintrages pour faire en sorte que les tubes arrivent au bon endroit dans un espace confiné.

En outre, si l'on souhaite pouvoir démonter l'empilement 20 pour pouvoir le faire fonctionner à un autre emplacement, lui conférant alors un caractère de type « Plug & Play » (PnP), soit de type « branche et utilise », il faudrait d'abord rompre les liaisons mécaniquement, par exemple à l'aide d'une scie à métaux, et préparer les nouvelles liaisons pour mettre l'empilement 20 sur un autre four, ce qui complique grandement les manipulations.

Enfin, il est à noter qu'un tel empilement 20 est très fragile et il est nécessaire d'effectuer le moins d'opérations possibles lors d'un changement d'emplacement. Ainsi, il faut notamment pouvoir éviter les vibrations, les chocs et éviter aussi de le retourner.

Les solutions de couplage évoquées précédemment ne permettent pas de répondre aux besoins énoncés ci-dessus. En particulier, les raccords à serrage mécanique double bague se soudent à haute température. Les soudures ne répondent pas à la problématique évoquée du fait de la complexité du soudage (accès difficile) et elles n'évitent pas la découpe des tubes pour le démontage.

Les solutions de couplage de l'art antérieur ne permettent pas de retirer l'empilement 20 d'un four 10 pour le reconnecter sur un autre four 10, c'est-à-dire d'avoir un caractère « Plug & Play », sans rompre les jonctions mécaniquement, ce qui oblige les opérateurs chargés du montage/démontage à réaliser un travail fastidieux de cintrage, de couplage et d'adaptation.

Par ailleurs, on connait également de US 2010/055525 A1 un exemple d'empilement à oxydes solides de type SOFC selon l'art antérieur, et on connaît également de US 2008/233457 A1, CN 203 836 426 U et CN 203 653 708 U d'autres exemples de structures de couplage ne concernant pas un empilement à oxydes solides de type SOFC.

### EXPOSÉ DE L'INVENTION

L'invention a pour but de remédier au moins partiellement aux besoins mentionnés précédemment et aux inconvénients relatifs aux réalisations de l'art antérieur.

Elle vise notamment la réalisation d'une conception particulière du couplage d'un empilement d'électrolyse à haute température (SOEC) ou de pile à combustible (SOFC), et plus spécifiquement à réaliser, en partie chaude, c'est-à-dire à l'intérieur de l'enceinte d'un four, et au droit des entrées et sorties des gaz, des liaisons étanches à haute température, par exemple jusqu'à environ 900°C, démontables et réutilisables, conférant alors un caractère de type « Plug & Play » à l'empilement.

L'invention a ainsi pour objet, selon l'un de ses aspects, un ensemble selon la revendication 1.

L'ensemble selon l'invention peut en outre comporter l'une ou plusieurs des caractéristiques suivantes prises isolément ou suivant toutes combinaisons techniques possibles.

De façon avantageuse, l'embase lisse peut comporter un rebord en saillie par rapport à sa surface extérieure lisse. L'écrou fileté peut également comporter un rebord en saillie par rapport à sa première portion filetée et comprenant la deuxième portion lisse. Le rebord de l'embase lisse et le rebord de l'écrou fileté peuvent être aptes à venir au contact l'un de l'autre entraînant l'arrêt du coulissement de l'écrou fileté par rapport à l'embase lisse.

Le système de couplage peut en outre comporter un joint, notamment un joint en mica, placé entre le rebord de l'embase lisse et le rebord de l'écrou fileté. Un tel joint peut en particulier être utile pour l'isolation électrique.

L'embase lisse, l'écrou fileté et l'embase filetée peuvent par ailleurs être réalisés en superalliage, notamment un alliage métallique, à base de nickel, en particulier de type Inconel 600 préférentiellement, voire encore de type Inconel 625, et/ou en acier inoxydable austénitique, en particulier de type inox 316L.

L'embase lisse peut comporter un alésage pour sa fixation sur un tube d'entrée/sortie de gaz de l'empilement à oxydes solides de type SOEC/SOFC.

L'embase filetée peut de même comporter comporte un alésage pour sa fixation sur un tube d'entrée/sortie de gaz.

Le système de couplage peut en outre comporter un joint, notamment un joint en mica, placé entre l'embase filetée et l'embase lisse. L'épaisseur du joint peut être comprise entre 0,1 et 1 mm. Un tel joint peut en particulier être utile pour l'étanchéité du système. Avantageusement, l'épaisseur du joint peut être inférieure ou égale à 0,3 mm de sorte à pouvoir réaliser une étanchéité à froid comme à chaud. De préférence, cette épaisseur est inférieure ou égale à 0,25 mm.

Le diamètre nominal de l'écrou fileté et/ou de l'embase filetée peut être compris entre M20 et M30, et préférentiellement être égal à M27. Des filetages épais et un pas important peuvent avantageusement permettre d'éviter un soudage diffusion entre les filets, et ainsi faciliter le démontage de la liaison réalisée.

Par ailleurs, l'embase filetée peut présenter une hauteur comprise entre 15 et 30 mm, et peut présenter un diamètre compris entre 20 et 30 mm.

De plus, l'embase lisse peut présenter une hauteur comprise entre 45 et 70 mm, et peut présenter un diamètre maximum de 30 mm.

La première portion filetée de l'écrou fileté et/ou le filetage de l'embase filetée peuvent en outre être recouverts d'un agent anti-grippant résistant à haute température.

L'embase filetée peut préférentiellement être soudée sur un tube d'entrée/sortie de gaz du four, notamment par soudure de type TIG.

L'embase filetée peut en outre être soudée sur une plaque de support fixée à la sole du four, notamment par soudure de type TIG et/ou par soudure à l'arc, la plaque de support étant traversée par le tube d'entrée/sortie de gaz du four.

De même, l'embase lisse peut préférentiellement être soudée sur un tube d'entrée/sortie de gaz de l'empilement à oxydes solides de type SOEC/SOFC, notamment par soudure de type TIG.

L'embase lisse peut en outre être soudée sur une plaque terminale inférieure de l'empilement, notamment par soudure de type TIG et/ou par soudure à l'arc, la plaque terminale inférieure étant traversée par le tube d'entrée/sortie de gaz de l'empilement.

De façon avantageuse, la première portion filetée de l'écrou fileté et/ou le filetage de l'embase filetée peuvent être enduits, avant mise en place et serrage, d'une pâte anti-grippante haute température qui peut faciliter le démontage et qui peut éviter un soudage diffusion des filets. Cette pâte anti-grippante peut être telle qu'une pâte anti-grippante et lubrifiante d'assemblage pour hautes températures, résistante à la corrosion, permettant d'éviter le blocage et l'usure excessive de pièces exposées à des températures extrêmes ou en atmosphère agressive telles que : filetages de machines thermiques, tubulures pour gaz chauds, brûleurs, soupapes, freins à disques, bougies, attaches d'échappements, galets, boulons, collets, entre autres. Elle peut avoir une formulation à base de cuivre, aluminium et graphite de sorte à protéger les pièces métalliques et assurer leur démontage. Il peut par exemple s'agir de la graisse verte commercialisée par la société Pyrox Thermique Matériaux consistant en un mélange à 50 % de poudre de chrome 3 et de graisse au cuivre pour pièces mécaniques commercialisée par la société Würth.

L'ensemble selon l'invention peuvent comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
- la figure 1 est une vue schématique montrant le principe de fonctionnement d'un électrolyseur à oxydes solides à haute température (SOEC),
- la figure 2 est une vue schématique éclatée d'une partie d'un électrolyseur à oxydes solides à haute température (SOEC) comprenant des interconnecteurs selon l'art antérieur,
- la figure 3 illustre le principe de l'architecture d'un four sur lequel un empilement d'électrolyse à haute température (SOEC) ou de pile à combustible (SOFC) fonctionnant à haute température est placé,
- la figure 4 représente, partiellement en perspective, un exemple de système de couplage d'un ensemble selon l'invention pour un empilement à oxydes solides de type SOEC/SOFC, en configuration d'utilisation pour le couplage de l'empilement à un four, et
- les figures 5 et 6 représentent respectivement, de façon isolée en perspective, des systèmes de couplage d'ensemble selon l'invention en configuration assemblée et en configuration non assemblée de l'écrou fileté et de l'embase filetée.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 à 3 ont déjà été décrites précédemment dans la partie relative à l'état de la technique antérieure et au contexte technique de l'invention. Il est précisé que, pour les figures 1 et 2, les symboles et les flèches d'alimentation de vapeur d'eau H₂O, de distribution et de récupération de dihydrogène H₂, d'oxygène O₂, d'air et du courant électrique, sont montrés à des fins de clarté et de précision, pour illustrer le fonctionnement des dispositifs représentés.

En outre, il faut noter que tous les constituants (anode/électrolyte/cathode) d'une cellule électrochimique donnée sont préférentiellement des céramiques. La température de fonctionnement d'un empilement de type SOEC/SOFC haute température est par ailleurs typiquement comprise entre 600 et 1000°C.

De plus, les termes éventuels « supérieur » et « inférieur » sont à comprendre ici selon le sens d'orientation normal d'un empilement de type SOEC/SOFC lorsque dans sa configuration d'utilisation.

En référence aux figures 4 à 6, on a illustré un principe de réalisation d'un système de couplage 30 d'ensemble 70 conforme à l'invention. Ce système de couplage 30 permet de réaliser le couplage entre un empilement 20 de type SOEC/SOFC et un four 10 apte à permettre l'arrivée et la sortie des gaz dans l'empilement 20. De façon générale, le système de couplage 30 est du type vis/écrou.

La figure 4 représente un ensemble 70 comprenant un empilement 20 à oxydes solides de type SOEC/SOFC fonctionnant à haute température et un four 10 sur lequel l'empilement 20 est couplé pour l'amenée et la sortie des gaz par le biais de systèmes de couplage 30 d'ensemble 70 conforme à l'invention. Plus précisément, l'ensemble 70 comporte quatre systèmes de couplage 30 pour les deux entrées/sorties prévues pour l'empilement 20.

Comme visible sur les figures 4 à 6, chaque système de couplage 30 comporte tout d'abord une embase filetée 31 creuse. Cette embase filetée 31 comporte un filetage F1 sur sa surface extérieure et est fixée sur un tube d'entrée/sortie 12 de gaz. Plus précisément, l'embase filetée 31 est fixée sur ce tube d'entrée/sortie 12 de gaz par soudure de type TIG, ce qui constitue le plan d'appui de l'empilement 20 qui fait donc partie de la sole 11 du four.

En outre, la sole 11 du four 10 comporte, dans cet exemple, une plaque de support 40 traversée par le tube d'entrée/sortie 12 de gaz et l'embase filetée 31 est également fixée à cette plaque de support 40, en particulier par soudure de type TIG ou par soudure à l'arc.

L'embase filetée 31 comporte un orifice 41 de mise en communication fluidique avec le tube d'entrée/sortie 12 de gaz. Elle est ainsi positionnée au droit du tube 12 formant une boucle d'alimentation de l'empilement 20.

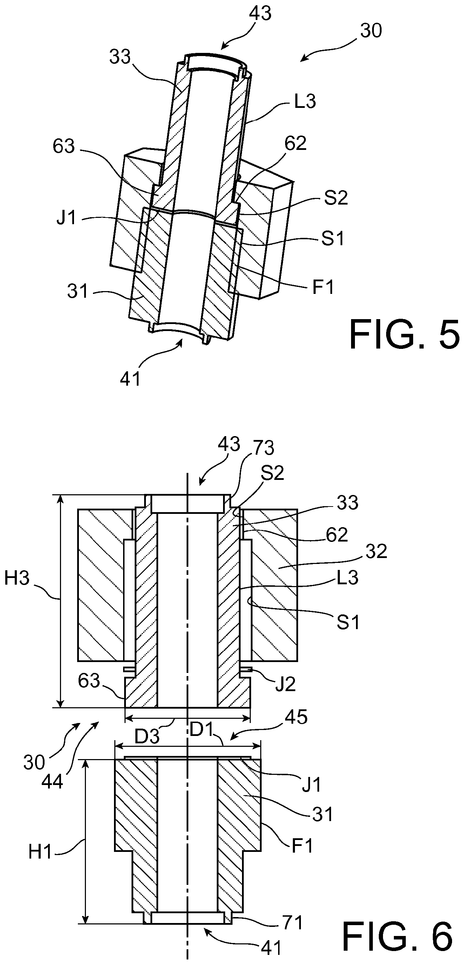

Par ailleurs, chaque système de couplage 30 comporte également une embase lisse 33 creuse présentant une surface extérieure lisse L3 et, en partie inférieure, un rebord 63 en saillie par rapport à cette surface extérieure lisse L3, comme visible sur la figure 6.

L'embase lisse 33 est fixée par soudure sur un tube d'entrée/sortie 52 de gaz de l'empilement 20 à oxydes solides de type SOEC/SOFC, en particulier par soudure de type TIG. De plus, l'embase lisse 33 est également fixée par soudure sur une plaque terminale inférieure 25 de l'empilement 20, notamment par soudure de type TIG ou par soudure à l'arc. La plaque terminale inférieure 25 est alors traversée par le tube d'entrée/sortie 52 de gaz de l'empilement 20, comme visible sur la figure 4.

De plus, l'embase lisse 33 comporte un orifice 43 de mise en communication fluidique avec le tube d'entrée/sortie 52 de gaz de l'empilement 20.

L'embase lisse 33 et l'embase filetée 31 comporte chacune un orifice 44, 45 pour permettre la mise en communication fluidique des deux embases 33 et 31 entre elles, comme visible sur la figure 6.

Par ailleurs, afin de permettre son assemblage avec le tube d'entrée/sortie 52 de gaz de l'empilement 20, l'embase lisse 33 comporte, en partie supérieure, un alésage 73, comme visible sur la figure 6. De même, l'embase filetée 31 comporte un alésage 71 pour sa fixation sur le tube d'entrée/sortie 12 de gaz.

En outre, conformément à l'invention, chaque système de couplage 30 comporte également un écrou fileté 32 qui coopère avec l'embase filetée 31 pour former un système vis/écrou.

Cet écrou fileté 32 coulisse par rapport à l'embase lisse 33. En effet, l'écrou fileté 32 comprend, sur sa surface intérieure, une première portion filetée S1 coopérant avec le filetage F1 de l'embase filetée 31 et une deuxième portion lisse S2 en contact coulissant sur la surface extérieure lisse L3 de l'embase lisse 33. Plus particulièrement, l'écrou fileté 32 comporte un rebord 62 en saillie par rapport à sa première portion filetée S1, comme visible sur la figure 6. Ce rebord 62 comporte la deuxième portion lisse S2. Alors, le rebord 63 de l'embase lisse 33 et le rebord 62 de l'écrou fileté 32 viennent au contact l'un de l'autre, ce qui entraîne l'arrêt du coulissement de l'écrou fileté 32 par rapport à l'embase lisse 33.

Autrement dit, l'écrou fileté 32, monté coulissant sur l'embase lisse 33, préférentiellement avec du jeu, va donc descendre sur l'embase lisse 33 et venir en contact avec la surface plane du rebord 63 de l'embase lisse 33 par le biais de la surface plane du rebord 62 de l'écrou fileté 32. Ainsi, un contact plan/plan est établi. L'écrou fileté 32 est rendu captif de l'embase lisse 33, c'est-à-dire qu'il est indémontable. L'embase lisse 33 et l'écrou fileté 32 deviennent ainsi des éléments de l'empilement 20.

Par ailleurs, comme visible sur la figure 6, un joint J2 en mica peut être placé entre le rebord 63 de l'embase lisse 33 et le rebord 62 de l'écrou fileté 32. Ce joint J2 peut s'apparenter à une rondelle de mica intercalée au niveau du contact plan/plan afin de garantir une isolation électrique de la liaison si nécessaire. La présence d'un tel joint J2 n'est pas requise en cas de non nécessité d'isolation électrique.

Par ailleurs, le diamètre nominal de l'écrou fileté 32 est préférentiellement compris entre M20 et M30. Il est à noter que plus le diamètre sera grand, meilleur sera le serrage mais le choix du diamètre est fonction de l'encombrement disponible. De plus, plus les filets sont choisis épais, moins grand sera le risque de « collage » de type soudage diffusion. Dans le cas d'un diamètre M20, le pas de vis est alors de 2,5 mm, et dans le cas d'un diamètre M30, le pas de vis est alors de 3,5 mm.

De façon avantageuse, la première portion filetée S1 de l'écrou fileté 32 et le filetage F1 de l'embase filetée 31 sont recouverts, avant mise en place et serrage de la liaison, d'une pâte anti-grippant résistante à haute température pour faciliter le démontage et pour éviter le phénomène de soudage diffusion. Cette pâte anti-grippant permet également de lubrifier la liaison et résiste à la corrosion. Elle permet d'éviter le blocage et l'usure excessive de pièces exposées à des températures extrêmes ou en atmosphère dite agressive, par exemple dans le cas de filetages de machines thermiques, de tubulures pour gaz chauds, de brûleurs, de soupapes, de freins à disque, de bougies, d'attaches d'échappements, de galets, de boulons, de collets, etc. Sa formulation à base de cuivre, aluminium et graphite peut protéger les pièces métalliques et assurer leur démontage.

Par ailleurs, comme visible sur les figures 5 et 6, chaque système de couplage 30 comporte également un autre joint J1 en mica placé entre l'embase filetée 31 et l'embase lisse 33. L'épaisseur du joint J1 en mica est préférentiellement comprise entre 0,1 et 1 mm. Ce joint J1 peut se présenter sous la forme d'une rondelle découpée par poinçonnage à la demande. Le mica présente des bonnes propriétés d'isolant électrique et de résistance à la chaleur, à savoir 900°C en continu et 1000°C en pointe. Lors du montage, une forte compression mécanique est réalisée pour exercer une pression sur le joint J1 comprise entre 70 et 100 N/m.

Par ailleurs, lors du montage, le fait de serrer l'écrou fileté 32 après avoir placé le joint J1 en mica provoquera un rapprochement de l'embase lisse 33, qui fera partie de l'empilement 20, de l'embase filetée 31, qui fera partie du four 10, afin de mettre en contact les faces planes qui prendront en sandwich le joint J1 en mica. Ce même principe est appliqué à toutes les entrées/sorties de l'empilement 20 de sorte que le fait de positionner l'empilement 20 au droit des quatre embases filetés 31 fait que le poids de l'ensemble appliqué sera déjà étanche.

De façon préférentielle, l'embase lisse 33, l'écrou fileté 32 et l'embase filetée 31 sont réalisés en superalliage à base de nickel, en particulier de type Inconel 600, et/ou en acier inoxydable austénitique, en particulier de type inox 316L. L'embase filetée 31 présente une hauteur H1 comprise entre 15 et 30 mm et un diamètre D1 compris entre 20 et 30 mm. De plus, l'embase lisse 33 présente une hauteur H3 comprise entre 45 et 70 mm et un diamètre D3 maximum de 30 mm, comme visible sur la figure 6. La hauteur H3 de l'embase lisse 33 doit être suffisante pour permettre le dégagement de l'écrou fileté 32 lors de la mise en place de l'empilement 20. Dans le cas d'un écrou fileté 32 de type M20, la hauteur H3 de l'embase lisse 33 sera par exemple de 30 mm. Dans le cas d'un écrou fileté 32 de type M30, la hauteur H3 de l'embase lisse 33 sera par exemple de 40 mm.

La présente invention présente de nombreux avantages par rapport aux solutions de l'art antérieur exposés au moins en partie ci-après.

L'empilement 20 étant appelé à être démonté et transporté d'un four 10 à un autre, ayant ainsi un caractère de type « Plug & Play », l'invention permet une déconnexion facile des liaisons par des clés plates car il n'y aura pas eu de contact entre les matériaux.

De plus, une telle opération de démontage est facilitée par l'enduction des filets de l'embase fileté 31 et des taraudages de l'écrou fileté 32, avant cyclage dans le four 10, avec une pâte anti-grippant haute température. Il est alors ensuite possible de surfacer au papier de verre les portées de joint pour la préparation d'un autre cyclage.

En outre, l'étanchéité est assurée par la pression apportée sur le joint J1 en mica et non par le filetage de sorte que l'invention ne nécessite pas de réaliser d'éventuels filetages coniques pour améliorer l'étanchéité. De plus, l'assemblage permet de faire disparaître d'éventuels défauts d'alignement et de parallélisme des surfaces en contact avec le joint J1 du fait de l'adaptabilité de la liaison par déformation élastique de l'ensemble lors de la mise en pression.

Par ailleurs, l'utilisation de joints J1 et J2 en mica permet de pouvoir fabriquer ceux-ci en situation, c'est-à-dire sur le lieu géographique où se situe le four 10, par exemple par l'usage d'un simple emporte-pièce ou d'une paire de ciseaux permettant d'obtenir les dimensions désirées sur les joints J1, J2 et des formes géométriques pouvant être autres que circulaires.

Bien entendu, l'invention n'est pas limitée aux exemples de réalisation qui viennent d'être décrits. Diverses modifications peuvent y être apportées par l'homme du métier selon les revendications.

## Revendications

1. Ensemble (70), **caractérisé en ce qu'**il comporte :
- un empilement (20) à oxydes solides de type SOEC/SOFC fonctionnant à haute température,
- un four (10) sur lequel l'empilement (20) est couplé pour l'amenée et la sortie des gaz,
- un système de couplage (30) étanche à haute température de l'empilement (20) à oxydes solides de type SOEC/SOFC, pour le couplage de l'empilement (20) à un four (10), le système de couplage (30) comportant :
- une embase (31) creuse au moins partiellement filetée (F1) sur sa surface extérieure dite embase filetée, destinée à être fixée sur un tube d'entrée/sortie (12) de gaz, l'embase filetée (31) comportant un orifice (41) de mise en communication fluidique avec le tube d'entrée/sortie (12) de gaz,
- une embase (33) creuse de surface extérieure au moins partiellement lisse (L3) dite embase lisse, destinée à être fixée sur un tube d'entrée/sortie (52) de gaz de l'empilement (20) à oxydes solides de type SOEC/SOFC, l'embase lisse (33) comportant un orifice (43) de mise en communication fluidique avec le tube d'entrée/sortie (52) de gaz de l'empilement (20), l'embase lisse (33) et l'embase filetée (31) comportant chacune un orifice (44, 45) pour leur mise en communication fluidique entre elles,
- un écrou fileté (32), apte à coopérer avec l'embase filetée (31) pour former un système vis/écrou et apte à coulisser par rapport à l'embase lisse (33), l'écrou fileté (32) comprenant, sur sa surface intérieure, une première portion filetée (S1) coopérant avec le filetage (F1) de l'embase filetée (31) et une deuxième portion lisse (S2) en contact coulissant sur la surface extérieure lisse (L3) de l'embase lisse (33).

2. Ensemble selon la revendication 1, **caractérisé en ce que** l'embase lisse (33) comporte un rebord (63) en saillie par rapport à sa surface extérieure lisse (L3) et **en ce que** l'écrou fileté (32) comporte un rebord (62) en saillie par rapport à sa première portion filetée (S1) et comprenant la deuxième portion lisse (S2), le rebord (63) de l'embase lisse (33) et le rebord (62) de l'écrou fileté (32) étant aptes à venir au contact l'un de l'autre entraînant l'arrêt du coulissement de l'écrou fileté (32) par rapport à l'embase lisse (33).

3. Ensemble selon la revendication 2, **caractérisé en ce que** le système de couplage (30) comporte un joint (J2), notamment un joint en mica, placé entre le rebord (63) de l'embase lisse (33) et le rebord (62) de l'écrou fileté (32).

4. Ensemble selon l'une des revendications précédentes, **caractérisé en ce que** l'embase lisse (33), l'écrou fileté (32) et l'embase filetée (31) sont réalisés en un alliage métallique à base de nickel et/ou en acier inoxydable austénitique.

5. Ensemble selon l'une quelconque des revendications précédentes, **caractérisé en ce que** l'embase lisse (33) comporte un alésage (73) pour sa fixation sur un tube d'entrée/sortie (52) de gaz de l'empilement (20) à oxydes solides de type SOEC/SOFC, et **en ce que** l'embase filetée (31) comporte un alésage (71) pour sa fixation sur un tube d'entrée/sortie (12) de gaz.

6. Ensemble selon l'une quelconque des revendications précédentes, **caractérisé en ce que** le système de couplage (30) comporte un joint (J1), notamment un joint en mica, placé entre l'embase filetée (31) et l'embase lisse (33).

7. Ensemble selon l'une quelconque des revendications précédentes, **caractérisé en ce que** le diamètre nominal de l'écrou fileté (32) est compris entre M20 et M30.

8. Ensemble selon l'une quelconque des revendications précédentes, **caractérisé en ce que** l'embase filetée (31) présente une hauteur (H1) comprise entre 15 et 30 mm, et présente un diamètre (D1) compris entre 20 et 30 mm.

9. Ensemble selon l'une quelconque des revendications précédentes, **caractérisé en ce que** l'embase lisse (33) présente une hauteur (H3) comprise entre 45 et 70 mm, et présente un diamètre (D3) maximum de 30 mm.

10. Ensemble selon l'une quelconque des revendications précédentes, **caractérisé en ce que** la première portion filetée (S1) de l'écrou fileté (32) et/ou le filetage (F1) de l'embase filetée (31) sont recouverts d'un agent anti-grippant résistant à haute température.

11. Ensemble selon l'une quelconque des revendications précédentes, **caractérisé en ce que** l'embase filetée (31) est soudée sur un tube d'entrée/sortie (12) de gaz du four (10), notamment par soudure de type tungstène-gaz inerte (TGI).

12. Ensemble selon l'une quelconque des revendications précédentes, **caractérisé en ce que** l'embase filetée (31) est soudée sur une plaque de support (40) fixée à la sole (11) du four, notamment par soudure de type tungstène-gaz inerte (TGI) et/ou par soudure à l'arc, la plaque de support (40) étant traversée par le tube d'entrée/sortie (12) de gaz du four (10).

13. Ensemble selon l'une quelconque des revendications précédentes, **caractérisé en ce que** l'embase lisse (33) est soudée sur un tube d'entrée/sortie (52) de gaz de l'empilement (20) à oxydes solides de type SOEC/SOFC, notamment par soudure de type tungstène-gaz inerte (TGI).

14. Ensemble selon l'une quelconque des revendications précédentes, **caractérisé en ce que** l'embase lisse (33) est soudée sur une plaque terminale inférieure (25) de l'empilement (20), notamment par soudure de type tungstène-gaz inerte (TGI) et/ou par soudure à l'arc, la plaque terminale inférieure (25) étant traversée par le tube d'entrée/sortie (52) de gaz de l'empilement (20).

## Patentansprüche

1. Anordnung (70), **dadurch gekennzeichnet, dass** sie umfasst:
- einen Festoxidstapel (20) vom SOEC/SOFC-Typ, der bei hoher Temperatur arbeitet,
- einen Ofen (10), an den der Stapel (20) für die Zufuhr und Ableitung von Gasen gekoppelt ist,
- ein hochtemperaturdichtes Kopplungssystem (30) des Festoxidstapels (20) vom SOEC/SOFC-Typ zum Koppeln des Stapels (20) mit einem Ofen (10), wobei das Kopplungssystem (30) umfasst:
- einen hohlen Sockel (31), der an seiner Außenfläche wenigstens teilweise mit einem Gewinde (F1) versehen ist, als Gewindesockel bezeichnet, der dazu bestimmt ist, an einem Gaseinlass-/Gasauslassrohr (12) befestigt zu werden, wobei der Gewindesockel (31) eine Öffnung (41) für eine Fluidverbindung mit dem Gaseinlass-/Gasauslassrohr (12) umfasst,
- einen hohlen Sockel (33) mit einer wenigstens teilweise glatten Außenfläche (L3), als glatter Sockel bezeichnet, der dazu bestimmt ist, an einem Gaseinlass-/Gasauslassrohr (52) des Festoxidstapels (20) vom SOEC/SOFC-Typ befestigt zu werden, wobei der glatte Sockel (33) eine Öffnung (43) für eine Fluidverbindung mit dem Gaseinlass-/Gasauslassrohr (52) des Stapels (20) umfasst, wobei der glatte Sockel (33) und der Gewindesockel (31) jeweils eine Öffnung (44, 45) aufweisen, um diese in Fluidverbindung miteinander zu bringen,
- eine Gewindemutter (32), die in der Lage ist, mit dem Gewindesockel (31) zusammenzuwirken, um ein Schrauben/Mutter-System zu bilden, und die in der Lage ist, relativ zu dem glatten Sockel (33) zu gleiten, wobei die Gewindemutter (32) auf ihrer Innenfläche einen ersten Gewindeabschnitt (S1) umfasst, der mit dem Gewinde (F1) des Gewindesockels (31) zusammenwirkt, und einen zweiten glatten Abschnitt (S2) in Gleitkontakt an der glatten Außenfläche (L3) des glatten Sockels (33) umfasst.

2. Anordnung nach Anspruch 1, **dadurch gekennzeichnet, dass** der glatte Sockel (33) einen von seiner glatten Außenfläche (L3) abstehende Rand (63) aufweist und dass die Gewindemutter (32) einen von ihrem ersten Gewindeabschnitt (S1) abstehenden Rand (62) aufweist, und umfassend den zweiten glatten Abschnitt (S2), wobei der Rand (63) des glatten Sockels (33) und der Rand (62) der Gewindemutter (32) dazu geeignet sind, miteinander in Kontakt zu kommen wodurch ein Anschlag für das Gleiten der Gewindemutter (32) in Bezug auf den glatten Sockel (33) entsteht.

3. Anordnung nach Anspruch 2, **dadurch gekennzeichnet, dass** das Kopplungssystem (30) eine Dichtung (J2), insbesondere eine Glimmerdichtung, umfasst, die zwischen dem Rand (63) des glatten Sockels (33) und dem Rand (62) der Gewindemutter (32) angeordnet ist.

4. Anordnung nach einem der vorhergehenden Ansprüche, **dadurch gekennzeichnet, dass** der glatte Sockel (33), die Gewindemutter (32) und der Gewindesockel (31) aus einer Metalllegierung auf Nickelbasis und/oder aus austenitischem Edelstahl hergestellt sind.

5. Anordnung nach einem der vorhergehenden Ansprüche, **dadurch gekennzeichnet, dass** der glatte Sockel (33) eine Bohrung (73) zu seiner Befestigung an einem Gaseinlass-/Gasauslassrohr (52) des Festoxidstapels (20) vom SOEC/SOFC-Typ aufweist und dass der Gewindesockel (31) eine Bohrung (71) zur Befestigung an einem Gaseinlass-/Gasauslassrohr (12) aufweist.

6. Anordnung nach einem der vorhergehenden Ansprüche, **dadurch gekennzeichnet, dass** das Kopplungssystem (30) eine Dichtung (J1), insbesondere eine Glimmerdichtung, aufweist, die zwischen dem Gewindesockel (31) und dem glatten Sockel (33) angeordnet ist.

7. Anordnung nach einem der vorhergehenden Ansprüche, **dadurch gekennzeichnet, dass** der Nenndurchmesser der Gewindemutter (32) zwischen M20 und M30 liegt.

8. Anordnung nach einem der vorhergehenden Ansprüche, **dadurch gekennzeichnet, dass** der Gewindesockel (31) eine Höhe (H1) zwischen 15 und 30 mm und einen Durchmesser (D1) zwischen 20 und 30 mm aufweist.

9. Anordnung nach einem der vorhergehenden Ansprüche, **dadurch gekennzeichnet, dass** der glatte Sockel (33) eine Höhe (H3) zwischen 45 und 70 mm und einen Durchmesser (D3) von nicht mehr als 30 mm aufweist.

10. Anordnung nach einem der vorhergehenden Ansprüche, **dadurch gekennzeichnet, dass** der erste Gewindeabschnitt (S1) der Gewindemutter (32) und/oder das Gewinde (F1) des Gewindesockels (31) mit einem hochtemperaturbeständigen Anti-Seize-Mittel beschichtet sind.

11. Anordnung nach einem der vorhergehenden Ansprüche, **dadurch gekennzeichnet, dass** der Gewindesockel (31) mit einem Gaseinlass-/Gasauslassrohr (12) des Ofens (10) verschweißt ist, insbesondere durch Wolfram-Inertgas (TGI)-Schweißen.

12. Anordnung nach einem der vorhergehenden Ansprüche, **dadurch gekennzeichnet, dass** der Gewindesockel (31) mit einer am Boden (11) des Ofens befestigten Trägerplatte (40) verschweißt ist, insbesondere durch Wolfram-Inertgas (TGI)-Schweißen und/oder durch Lichtbogenschweißen, wobei das Gaseinlass-/Gasauslassrohr des Ofens (10) durch die Trägerplatte (40) verläuft.

13. Anordnung nach einem der vorhergehenden Ansprüche, **dadurch gekennzeichnet, dass** der glatte Sockel (33) mit einem Gaseinlass-/Gasauslassrohr (52) des Festoxidstapels (20) vom SOEC/SOFC-Typ verschweißt ist, insbesondere durch Wolfram-Inertgas (TGI)-Schweißen.

14. Anordnung nach einem der vorhergehenden Ansprüche, **dadurch gekennzeichnet, dass** der glatte Sockel (33) mit einer unteren Endplatte (25) des Stapels (20) verschweißt ist, insbesondere durch Wolfram-Inertgas (TGI)-Schweißen und/oder durch Lichtbogenschweißen, wobei das Gaseinlass-/Gasauslassrohr des Stapels (20) durch die untere Endplatte (25) verläuft.

## Claims

1. Assembly (70), **characterised in that** it comprises:
- a stack (20) having SOEC/SOFC-type solid oxides operating at a high temperature,
- a furnace (10) with which the stack (20) is coupled for the supply and discharge of the gases,
- a coupling system (30) for the high-temperature sealed coupling of a stack (20) having SOEC/SOFC-type solid oxides, for coupling the stack (20) with the furnace (10), comprising:
- a hollow connector (31) that is at least partially threaded (F1) on the outer surface thereof, referred to as a threaded connector, intended to be attached to a gas inlet/outlet pipe (12), the threaded connector (31) comprising an opening (41) for establishing fluid communication with the gas inlet/outlet pipe (12),
- a hollow connector (33) having an outer surface that is at least partially smooth (L3), referred to as a smooth connector, intended to be attached to a gas inlet/outlet pipe (52) of the stack (20) having SOEC/SOFC-type solid oxides, the smooth connector (33) comprising an opening (43) for establishing fluid communication with the gas inlet/outlet pipe (52) of the stack (20), the smooth connector (33) and the threaded connector (31) each comprising an opening (44, 45) for establishing fluid communication with one another,
- a threaded nut (32), capable of engaging with the threaded connector (31) to form a screw/nut system and capable of sliding relative to the smooth connector (33), the threaded nut (32) comprising, on the inner surface thereof, a first threaded portion (S1) engaging with the thread (F1) of the threaded connector (31) and a second smooth portion (S2) in sliding contact with the smooth connector (33), on the smooth outer surface (L3) thereof.

2. Assembly according to claim 1, **characterised in that** the smooth connector (33) comprises a rim (63) that protrudes relative to the smooth outer surface (L3) thereof, and **in that** the threaded nut (32) comprises a rim (62) that protrudes relative to the first threaded portion (S1) thereof and comprising the second smooth portion (S2), the rim (63) of the smooth connector (33) and the rim (62) of the threaded nut (32) being capable of coming into contact with one another, stopping the sliding of the threaded nut (32) relative to the smooth connector (33).

3. Assembly according to claim 2, **characterised in that** the coupling system (30) comprises a gasket (J2), in particular a mica gasket, placed between the rim (63) of the smooth connector (33) and the rim (62) of the threaded nut (32).

4. Assembly according to one of the previous claims, **characterised in that** the smooth connector (33), the threaded nut (32) and the threaded connector (31) are made from a metallic nickel-based alloy and/or are made from austenitic stainless steel.

5. Assembly according to any of the previous claims, **characterised in that** the smooth connector (33) comprises a bore (73) for the attachment thereof to a gas inlet/outlet pipe (52) of the stack (20) having SOEC/SOFC-type solid oxides, and **in that** the threaded connector (31) comprises a bore (71) for the attachment thereof to a gas inlet/outlet pipe (12).

6. Assembly according to any of the previous claims, **characterised in that** the coupling system (30) comprises a gasket (J1), in particular a mica gasket, placed between the threaded connector (31) and the smooth connector (33).

7. Assembly according to any of the previous claims, **characterised in that** the nominal diameter of the threaded nut (32) lies in the range M20 to M30.

8. Assembly according to any of the previous claims, **characterised in that** the threaded connector (31) has a height (H1) that lies in the range 15 to 30 mm, and has a diameter (D1) that lies in the range 20 to 30 mm.

9. Assembly according to any of the previous claims, **characterised in that** the smooth connector (33) has a height (H3) that lies in the range 45 to 70 mm, and has a maximum diameter (D3) of 30 mm.

10. Assembly according to any of the previous claims, **characterised in that** the first threaded portion (S1) of the threaded nut (32) and/or the threading (F1) of the threaded connector (31) are coated in an anti-seize agent capable of withstanding high temperatures.

11. Assembly according to any preceding claim, **characterised in that** the threaded connector (31) is welded to a gas inlet/outlet pipe (12) of the furnace (10), in particular by tungsten inert gas (TIG)-type welding.

12. Assembly according to any preceding claim, **characterised in that** the threaded connector (31) is welded to a support plate (40) attached to the hearth (11) of the furnace, in particular by tungsten inert gas (TIG)-type welding and/or by arc welding, the gas inlet/outlet pipe (12) of the furnace (10) passing through the support plate (40).

13. Assembly according to any preceding claim, **characterised in that** the smooth connector (33) is welded to a gas inlet/outlet pipe (52) of the stack (20) having SOEC/SOFC-type solid oxides, in particular by tungsten inert gas (TIG)-type welding.

14. Assembly according to any preceding claim, **characterised in that** the smooth connector (33) is welded to a lower end plate (25) of the stack (20), in particular by tungsten inert gas (TIG)-type welding and/or by arc welding, the gas inlet/outlet pipe (52) of the stack (20) passing through the lower end plate (25).
